(19) **Europäisches Patentamt**

**European Patent Office**

**Office européen des brevets**

(11) Publication number: **0 181 049**
**B1**

(12) **EUROPEAN PATENT SPECIFICATION**

(45) Date of publication of the patent specification:
**11.04.90**

(21) Application number: **85201828.2**

(22) Date of filing: **08.11.85**

(51) Int. Cl.⁴: **A01J 25/00**, A23C 19/00

(54) Method and device for the preparation of cheese and also cheese obtained making use thereof.

(30) Priority: **09.11.84 NL 8403437**

(43) Date of publication of application:
**14.05.86 Bulletin 86/20**

(45) Publication of the grant of the patent:
**11.04.90 Bulletin 90/15**

(84) Designated Contracting States:
**AT BE CH DE FR GB IT LI LU NL SE**

(56) References cited:
**CH-A- 282 720**
**NL-A- 281 015**

**Annual Report 1983 - Bond van Coöperatieve
Zuivelfabrieken in Friesland, page 32, April 1984
Annual Report 1983 - Nederlands Instituut voor
Zuivelonderzoek, page 85, May 1984**

(73) Proprietor: **MELKUNIE HOLLAND B.V., De Bleek 1 P.O.
Box 222, NL-3440 AE Woerden(NL)**

(72) Inventor: **van Dijk, Henricus Johannes Maria,
Krügerlaan 58, NL-2806 EK Gouda(NL)**

(74) Representative: **van der Beek, George Frans, Ir. et al,
Nederlandsch Octrooibureau Scheveningseweg 82 P.O.
Box 29720, NL-2502 LS 's-Gravenhage(NL)**

ACTORUM AG

# Description

The invention relates to a method for the preparation of cheese by curdling milk or a milk product to form a mixture of whey and curd ("whey curd") and formation of cheese therefrom, gas being introduced into the whey curd for the purpose of forming holes.

A method of this type is known from the Annual Report for 1983 of the Bond van Coöp. Zuivelfabrieken in Friesland (Federation of Cooperative Dairy Factories in Friesland) (page 32) which was published in April 1984. In this case air is directly injected into the whey curd pipe, which is the pipe through which the mixture of whey and curd is transported by means of a curd pump to the draining and forming equipment. It is reported there that the problem of too few holes (openings in the cross-section of the cheese which are not too large but are certainly round and smooth-walled) in the cross-section of, in particular, Gouda cheese is considerably simplified.

In the Annual Report for 1983 of the Nederlands Instituut voor Zuivelonderzoek (Dutch Institute for Dairy Research) (NIZO), which was published in May 1984 it is reported on page 85 that an attempt has been made to improve the extent of hole formation in cheese by injecting air with a capillary into a whey curd pipe before the curd pump of a continuous draining device. In these known method cheese is, however, obtained which contains holes in the cross-section which are not well formed (such as small or oombined) and are sometimes somewhat unevenly distributed ("nest-like" cheese).

In the cheese industry there is a need for a method of regulating the number of holes in the bore and in the cross-section of cheese such as Gouda cheese in a desired manner. According to the Dutch Landbouwkwaliteitsbeschikking Kaasprodukten (Agricultural Quality Ordinance for Cheese Products) the cheeses named therein such as Gouda and Edam must be provided with more or less round openings having a diameter of approximately 1 to 10 mm (whether or not uniformly distributed throughout the cheese). The number of holes may be too small particularly in cheeses which are made by means of a continuous-operation draining device. The number of holes is dependent on various conditions such as the quality of the starting materials (for example milk, cheese starter, any other additives) which inter alia is bound up with the season and the nature of the feed. Requirements are imposed by certain buyers on the specific number of holes in the cheese or in the cross-section of the cheese such as Gouda cheese.

It was found that the formation of holes can be regulated in the desired manner by using a method of the type described in the introduction if gas-containing liquid is introduced into the whey curd according to the invention.

Especially liquid containing small air bubbles is injected into the whey curd.

The small gas bubbles introduced into the whey curd with a small spread in size, e.g. approximately 0.2 mm have a diameter of 0.1-0.8 mm, preferably 0.2-0.6 mm. If the diameter is greater than 0.8 mm, too large or too many combined holes are easily formed in the cheese. This is the case if a so-called BD cheese starter (mixed culture of Betacoccus cremorus and Streptococcus Diacetylactis), which forms $CO_2$ more rapidly, is used. With a B cheese starter (Betacoccus cremorus) no holes or a few small holes are normally produced. With direct air injection more (too) small holes are produced. If the diameter is less than 0.1 mm, the possibility exists that the small gas or air bubbles redissolve in the whey-curd mass.

To obtain the desired number of holes in the cheese, the liquid used for the injection into the whey curd contains in general 30-200 $cm^3$ of small gas or air bubbles per litre and 0.1-10 ml, preferably 0.2-2 ml, of liquid containing small gas or air bubbles is injected per litre of whey curd.

The small gas bubbles with the small diameter required according to the invention may be formed by introducing gas into a fast-flowing liquid. However, the gas can in practice not be introduced directly into the whey curd because with a batch wise method the whey curd does not move or hardly moves, and with a continuous method it flows too slowly. In a batch wise method it is also not possible to stir too vigorously because this results in undesired damage or destruction of the curd particles.

The liquid used for the injection may be whey which, for example, originates from the buffer tank for the whey curd. It is also possible to use other liquids, for example water, which has the advantage that the supply system for the liquid containing the small gas or air bubbles does not have to be cleaned.

Using the method according to the invention, the number of holes in the cheese can be adjusted in the manner desired by buyers. As a result it is possible, regardless of the season and the starting materials, to prepare cheese with not too many and not too few holes in the cross-section which have a diameter in the desired range.

The invention also relates to a device which is suitable for carrying out the method described above, which device comprises a pipe and a container for whey-curd and is characterised in that means are present which introduces liquid containing small gas bubbles having a diameter of 0.1-0.8 mm into the whey- curd pipe. The means for the introduction of a liquid containing small gas or air bubbles preferably comprise a nozzle with a device for mixing liquid and gas connected upstream.

The mixing device for liquid and gas comprises, for example, a supply pipe for liquid which is connected to the nozzle and into which a supply pipe for gas debouches before the nozzle.

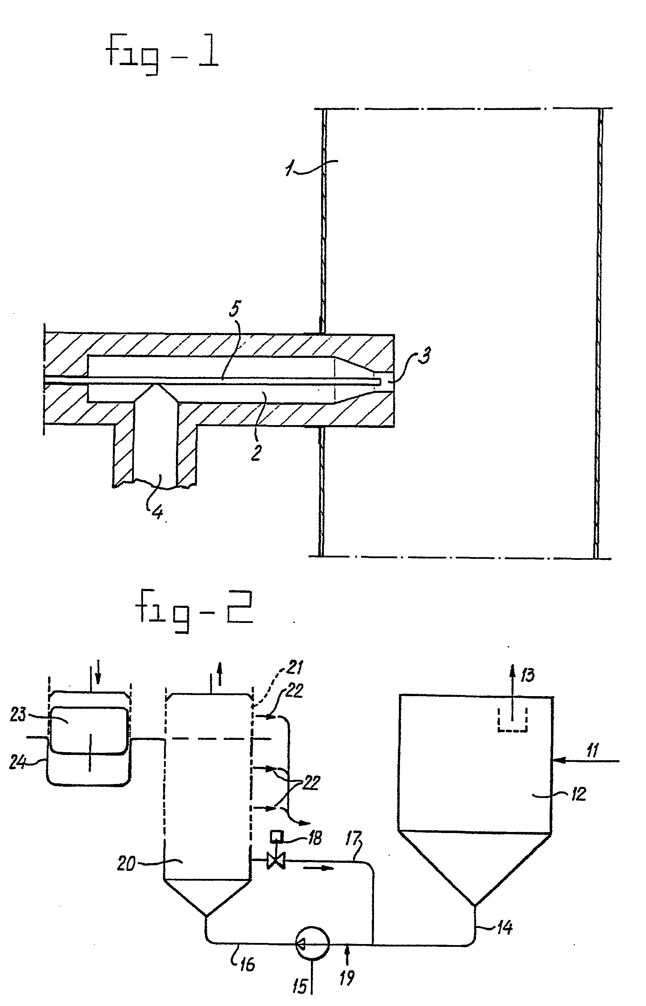

A mixing device of this type is shown schematically in Figure 1 in which a supply element 2 debouches into the whey-curd pipe 1 before the whey-curd pump (not shown). This supply element 2 comprises an injection nozzle 3 to which the supply pipe for liquid 4 is connected. The supply pipe for gas 5 debouches before the nozzle 3 into the supply pipe for liquid. The speeds of the water in the injection nozzle 3 and the whey-curd pipe 1 are, for example, 1.7-3 and 0.4-0.6 m/sec. respectively. Not only the speed is of importance; the flow pattern in the injection nozzle is turbulent and favourable for the formation of small air bubbles. 150-300 ml of water and 200-300 litre of whey curd per minute flow, for example, through nozzle 3 and whey-curd pipe 1.

By means of the device described above it is possible to introduce the appropriate quantity of small gas bubbles with the desired diameter into the whey curd flowing in pipe 1 by adjustment of the gas metering and the liquid metering.

The use of the device according to the invention shown in Figure 1 is explained in more detail by reference to the device shown in Figure 2 which shows a Conomatic (trademark) forming and draining machine.

In Figure 2 whey curd is fed at 11 from a stock holder (cheese tank) (not shown) into buffer tank 12. Any excess of whey is removed via 13. By means of pump 15, the whey curd is fed via pipes 14 and 16 respectively to draining column 20. To the pipe 14 the mixing device for liquid and gas according to Figure 1 is connected at 19. Mixing device 19 may also be connected to line 16, i.e. connected behind the whey-curd pump 15. In the draining column 20 there are removal elements 22 for the removal of the whey. The curd is removed from the top of the draining column 20 by means of baskets 21 and transferred as blocks of curd 23 to cheese container 24 in which the cheeses are further formed. Pipe 14 is also connected to draining column 20 via bypass 17. In bypass 17 there is a shut-off valve 18 which is opened when basket (baskets) 21 is (are) changed at the top of the draining column 20.

It is pointed out that the device shown in Figure 2 for the carrying out of the method according to the invention in a continuous manner should not be construed as limiting.

The invention also relates to cheese obtained according to the method described above or using the device described above.

The invention is explained in more detail in the following example.

Example

1. The draining of the curd

Cheese was prepared in the forming and draining device according to Figure 2. On changing baskets 21 at the top of draining column 20 shut-off valve 18 in the by-pass 17 was opened. Whey-curd pump 15 then continued to run. Every 20 minutes the contents of a cheese tank (not shown) were transferred by pumping to buffer tank 12. Each cheese tank yields approximately 96 12 kg Gouda cheeses.

2. The determination of the size of the small air bubbles

The speed of rise of the small air bubbles was determined visually. The corresponding diameter was read off from a table (chem. Eng. Handbook, J.H. Perry, 1963, chapter 18, page 89); this in the device described a speed of 2.2 cm/sec corresponded to a small air bubble diameter of 0.2 mm.

3. The testing of the mixing device for liquid and gas (small air bubble injector) shown in Figure 1.

Before the injector was connected at 19, the operation thereof was first checked in water. Per batch (cheese tank) 2-3 combinations of water and air metering were used. After the first 20 cheeses has been produced from a certain tank, the cheeses (blanks) used for checking were chosen and marked. Then the injector was put into operation. Approximately the 15th and 16th (spare) cheese after this instant was marked. The air and/or water supply to the injector were then changed immediately and the procedure was repeated.

4. Assessment of the cheeses

After a storage time of approximately 2 weeks the cheeses were sectioned. The number of holes on one of the two cut faces was counted. A number of cheeses were divided into eight segments, one cut face being assessed per segment. Only spherical openings were considered as holes. Cauliflower-like openings were interpreted as combined holes. Irregular holes near the rind were ignored.

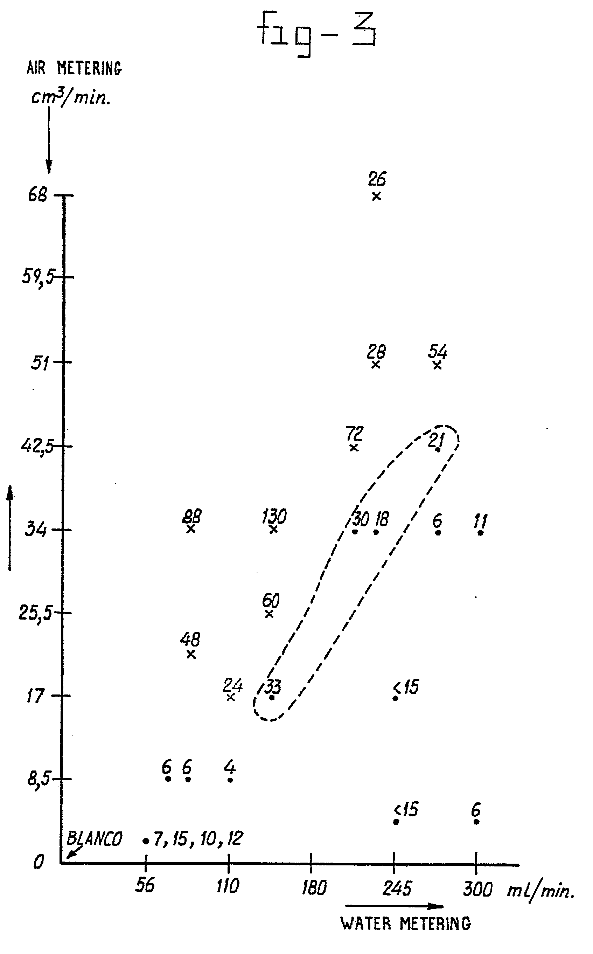

The results of the tests are shown in Figure 3. In this figure the numbers indicate the number of holes in one cross-section. The symbol "x" signifies too many combined holes. The region surrounded by a dotted line indicates which conditions are optimum in this example for obtaining a pattern of holes required by certain buyers.

In a test under other factory conditions a favourable result relating to the hole formation was found at a water metering of 280 ml/min and an air metering of 13 cm³/min.

Claims

1. The method for the preparation of cheese by curdling milk or a milk product to form a mixture of whey and whey curd and formation of cheese therefrom, a gas being introduced into the mixture of whey and curd, which is kept in motion before it is fed into a draining and forming device (20), for the purpose of forming cavities, characterised in that a liquide containing small gas bubbles having a diameter of 0.1–0.8 mm is introduced into the whey curd.

2. The method according to claim 1, characterised in that the small gas bubbles in the liquid have a diameter of 0.2–0.6 mm.

3. The method according to claim 1 or 2, characterised in that small air bubbles are used as the gas bubbles.

4. The method according to claims 1–3, characterised in that 1 litre of the injected liquid contains 30–200 cm³ of the gas.

5. The method according to claims 2–4, characterised in that 0.10–10 ml of the gas-containing liquid is injected per litre of the whey curd.

6. The method according to claims 1–5, characterised in that water is used as the liquid.

7. The method according to claims 1–6, characterised in that the preparation of the cheese is carried out in a continuous manner.

8. The device suitable for carrying out the method according to claims 1–7, which device contains a pipe (14, 16) for whey curd and a container for whey curd, characterised in that a means (2; 19) is present which introduces a liquid containing small gas bubbles having a diameter of 0.1–0.8 mm into the whey-curd pipe (14, 16).

9. The device according to claim 8, characterised in that the means which introduces the bubbles containing liquid comprises a nozzle (3) with a device (2) which mixes the liquid and the gas connected upstream of the nozzle.

10. The device according to claim 9, characterised in that the mixing device (2) for the liquid and the gas comprises a supply pipe (4) for the liquid which is connected to the nozzle (3) and into which a supply pipe (5) for gas debouches before the nozzle.

11. Cheese obtained according to the method of any one of claims 1–7.

## Patentansprüche

1. Verfahren zur Herstellung von Käse durch Gerinnung von Milch oder eines Milchprodukts, um ein Gemisch aus Molke und käsigem Molkenniederschlag zu erzeugen und zum Bilden aus Käse daraus, wobei ein Gas in das Gemisch aus Molke und Niederschlag eingeführt wird, das in Bewegung gehalten wird, bevor es in eine Trocknungs- und Formvorrichtung (20) eingeleitet wird, um darin Hohlräume auszubilden, dadurch gekennzeichnet, daß eine Flüssigkeit, die kleine Gasbläschen eines Durchmessers von 0,1–0,8 mm enthält, in den Molkeniederschlag eingeleitet wird.

2. Verfahren nach Anspruch 1, dadurch gekennzeichnet, daß die kleinen Gasbläschen in der Flüssigkeit einen Druchmesser von 0,2–0,6 mm haben.

3. Verfahren nach Anspruch 1 oder 2, dadurch gekennzeichnet, daß kleine Luftbläschen als die Gasbläschen verwendet werden.

4. Verfahren nach den Ansprüchen 1 bis 3, dadurch gekennzeichnet, daß ein Liter der eingeleiteten Flüssigkeit 30–200 cm³ Gas enthält.

5. Verfahren nach den Ansprüchen 2 bis 4, dadurch gekennzeichnet, daß 0,10–10 ml der gashaltigen Flüssigkeit pro Liter Molkeniederschlag eingeleitet wird.

6. Verfahren nach den Ansprüchen 1 bis 5, dadurch gekennzeichnet, daß Wasser als die Flüssigkeit verwendet wird.

7. Verfahren nach den Ansprüchen 1 bis 6, dadurch gekennzeichnet, daß die Herstellung von Käse in einer kontinuierlichen Weise durchgeführt wird.

8. Vorrichtung zur Durchführung des Verfahrens nach den Ansprüchen 1 bis 7, enthaltend ein Rohr (14, 16) für den Molkenniederschlag und einen Behälter für den Molkenniederschlag, dadurch gekennzeichnet, daß eine Einrichtung (2; 19) vorhanden ist, die eine Flüssigkeit in das Molkenniederschlagrohr (14, 16) einleitet, die kleine Gasbläschen enthält, die einen Durchmesser von 0,1–0,8 mm haben.

9. Vorrichtung nach Anspruch 8, dadurch gekennzeichnet, daß die Einrichtung, die die bläschenhaltige Flüssigkeit einleitet, eine Düse (3) aufweist, wobei eine Einrichtung (2), die die Flüssigkeit und das Gas miteinander vermischt, stromaufwärts der Düse angeschlossen ist.

10. Vorrichtung nach Anspruch 9, dadurch gekennzeichnet, daß die Mischeinrichtung (2) für die Flüssigkeit und das Gas ein Zuführrohr (4) für die Flüssigkeit aufweist, das an die Düse (3) angeschlossen ist und in das ein Zuführrohr (5) für das Gas vor der Düse mündet.

11. Käse, der nach dem Verfahren nach einem der Ansprüche 1 bis 7 hergestellt ist.

## Revendications

1. Procédé destiné à la préparation de fromage en caillant du lait ou un produit laitier pour former un mélange de petit lait et de lait caillé pour en fair du fromage, un gaz étant introduit dans le mélange de petit lait et de lait caillé, qui est agité avant d'être envoyé dans un dispositif d'égouttage et de moulage (20) en vue de former des cavités, caractérisé en ce que, un liquide contenant des petites bulles de gaz ayant un diamètre de 0,1 à 0,8 mm est introduit dans le lait caillé.

2. Procédé selon la revendication 1, caractérisé en ce que les petites bulles de gaz dans le liquide ont un diamètre de 0,2 à 0,6 mm.

3. Procédé selon la revendication 1 ou 2, caractérisé en ce que des petites bulles d'air sont utilisées comme bulles de gaz.

4. Procédé selon les revendications 1 à 3 caractérisé en ce que 1 litre du liquide injecté contient 30 à 200 cm³ du gaz.

5. Procédé selon les revendications 2 à 4 caractérisé en ce que 0,10 à 10 ml de liquide contenant du gaz est injecté par litre de lait caillé.

6. Procédé selon les revendications 1 à 5 caractérisé en ce que le liquide utilisé est de l'eau.

7. Procédé selon les revendications 1 à 6 caractérisé en ce que la préparation du fromage est effectuée de manière continue.

8. Dispositif convenant à la mise en œuvre du procédé selon les revendications 1 à 7 comportant un tuyau (14, 16) pour le lait caillé et un réceptacle pour le lait caillé caractérisé en ce que des moyens (2; 19) sont prévus pour introduire un liquide contenant de petites bulles de gaz ayant un diamètre de 0,1 à 0,8 mm dans le tuyau (14, 16) de lait caillé.

9. Dispositif selon la revendication 8, caractérisé en ce que les moyens pour introduire le liquide contenant des bulles de gaz comportent une ajutage (3) avec un dispositif (2) qui mélange le liquide et le gaz branché en amont de l'ajutage.

10. Dispositif selon la revendication 9, caractérisé en ce que le dispositif mélangeur (2) pour le liquide et le gaz comporte un tuyau d'alimentation (4) pour le liquide qui est branché à l'ajutage (3) et dans lequel débouche un tuyau d'alimentation (5) en gaz avant l'ajutage.

11. Fromage obtenu par le procédé selon l'une quelconque des revendications 1 à 7.

Fig-1

Fig-2

fig - 3